# EUROPEAN PATENT APPLICATION

(11) **EP 1 443 739 A1**
(43) Date of publication of application: **04.08.2004**
(21) Application number: 03002238.8
(22) Date of filing: 31.01.2003
(51) Int. Cl.: H04M 3/42, H04M 3/58

(54) **Method of controlling duration of a call connection while using a call transfer processing within a telecommunication network**

(71) Applicant: SIEMENS AKTIENGESELLSCHAFT, 80333 München (DE)
(72) Inventor: Stylianopoulos, Georgios, 15234 Athen-Chalandri (GR)

(57) **Abstract**

The present invention comprises a method of controlling duration of a call connection while using a call transfer processing and a switching system which is suitable for using the method. In a telecommunication network a call connection is established trough the network (Network) between a calling party (Sub A) and a first called party (Sub B). The method according to the invention comprises the following steps:
- transferring the call connection from the first called party (Sub B) to a second called party (Sub C),
- initiating a timer by setting a predefined time period, and
- disconnecting the call connection between said parties afterwards when expiring the predefined time period.

## Description

The present invention relates to a method of controlling duration of a call connection while using a call transfer processing and a switching system which is suitable for using the method.

### BACKROUND OF INVENTION

This invention is used in the telecommunication field and extends the control of an already known feature called "Call Transfer".

Call Transfer feature (further mentioned as CT) is particulary used by ISDN/PSTN telephony users who wish to transfer an already established call to another established or not completely established call via interconnecting the two remote subscribers. Three variations of CT exist: CT in talk state (CTT), CT in ringing state (CTR), CT in queue (CTQ). CT can be A-side if both calls are initiated by the CT served user or can be B-side if at least one call is incoming to the served user.

CTT is used for ISDN telephony users who wish to interconnect two remote users when a complete connection between them and the served user has been established.

CTR is used for ISDN telephony users who wish to interconnect two remote users when a complete connection between one of them exists and the second connection between the served user and the remote user is in ringing state (remote user is ringing).

CTQ is used for ISDN telephony users who wish to interconnect two remote users when a complete connection between one of them exists and the second connection between the served user and the remote user has been put in queue (remote user is currently busy).

CT feature is activated by either keypad or functional protocol. The activation is done instantly by the served user when it is desired.

Some enhancements have been made for CT in order to be able to control the CT call duration (connection between the two served user's remote users).

After a successful CT invocation the CT served user can request either an interrogation or a release of the CT connection.

Within the interrogation, the served user gets an acknowledge message back from the network with the information that the CT connection is still active or not.

Within the release, the served user can directly release the CT connection and gets an acknowledge message back from the network with the information "released" whenever a CT connection was active and now is released or "not active" whenever no CT connection was active for release.

The interrogation and release functions are performed via SCI function.

Subscriber Control Input (further mentioned as SCI) is a served user provided function by which the public switch user can either request a function from the public switch or inform it about a situation.

The activation CT interrogation is done by SCI in the way shown below:
- SCI interface (user defined option):

Using Keypad protocol (e.g. LH DT # <Code for Interrogation of release of CT>* <CT served user subscriber number> # RH).

The above mentioned abbreviations meaning is explained below:

LH= Lift handset, DT= Dial tone, RH= Replace handset, DN= directory number, LAC= local area code, DIV= activate a specific CF type + target subscriber number, CDIV= deactivate a specific CF type, CF = Call feature.

The way CT feature is controlled up to now is neither flexible, nor user-friendly, nor practical for both CT served user and the remote users. The current implementation can't be applied for business cases when the CT served user doesn't have the time to monitor CT calls performed by him/her. Additionally, it is generally rude to connect the two remote users and suddenly disconnect them without even a notice in advance. Finally, but not least, the current existing control of the CT connection is connectionless and not connection related meaning that if the served user has three CT connections simultaneously active then he can either disconnect all of them or none.

### SUMMARY OF INVENTION

The present invention aims to provide a method and a switching system for use in a telecommunication network which improves the CT connection control.

Said problems are solved by the features mentioned in the independent claims regarding a method and regarding a switching system. Preferred embodiments of the invention are described in the dependent claims.

Accordingly, an aspect of the present invention is a method and a system to enable controlling CT feature. The control of CT feature is done by giving the served user the possibility to assign a time limit of the duration of feature's duration (time controlled CT or further mentioned as TCT).

By this change, when the time limit has been reached CT call will be automatically released by the network and a notification about that release should be send to the CT served user.

It should be noted here that for this invention all type of CT are involved with no exception.

This invention implementation is proposed with three different variants in order to provide the user the most cost effective/customer satisfactory solution.

Variant#1: Not user defined TCT.

Within this implementation, CT is invoked normally, but simultaneously to the CT invocation the CT call duration supervision timer (TCTD) will be assigned. The TCTD value can be default for the whole network or can be defined (issues for all CT connections performed for current served user) per user upon administration of TCT by the network administrator.

Then the remote users will get the normal CT notifications with the addition of the time duration of the CT connection (depending on TCTD default value).

When the CT connection is released by the remote users before the TCTD expiration then TCTD timer is stopped and released.

If CT connection is still active and the TCTD timer value has been elapsed then the CT connection is released.

An aditional option can be to send an additional notification messaged to the CT served user when a CT connection has been disconnected.

For the implementation of this variant at the public switch, software changes are needed at the processor which handles CT feature (Group processor (= GP) for product "EWSD" of the company Siemens AG) in order to be able to handle the assigning of the new timer (TCTD) and the expiration of it (new steptable, routines are needed). Also adaptations in database administration processor and MML (= man machine language) handler (Central processor (= CP) for the EWSD-product) will be necessary in order to be able to handle the enhanced MML for CT (for the administration of CT).

Nothing differs on the CT invocation procedure. The administation of TCT is done in the following manner:
- MML Interface (network administrator option):
   MODSUB:LAC=lac,DN=dn,COS=TCT-HHMM, SERV=service;
   where HH=hours, MM=minutes define the TCTD timer value.

Variant#2: User defined TCT.

Within this implementation, CT is invocation is also altered. When CT is invoked then on top of the invocation command the time of the CT connection duration should be entered. Then, simultaneously to the CT invocation the CT call duration supervision timer (TCTD) will be assigned with the value defined by CT served user.

Then the remote users will get the normal CT notifications with the addition of the time duration of the CT connection (depending on TCTD default value).

When the CT connection is released by the remote users before the TCTD expiration then TCTD timer is stopped and released. If CT connection is still active and the TCTD timer value has been elapsed then the CT connection is released.

An aditional option can be to send an additional notification messaged to the CT served user when a CT connection has been disconnected.

For the implementation of this variant at the public switch, software changes are needed at the processor which handles CT feature (GP for EWSD product) in order to be able to enter the TCTD value at the invocation time, to handle the assigning of the new timer (TCTD) and the expiration of it (new steptable, routines are needed). Also adaptations in database administration processor and MML handler (CP for EWSD product) will be necessary in order to be able to handle the enhanced MML for CT (for the administration of CT). Additionally, software changes are also needed at the firmware of the ISDN devices which use functional protocol in order to have the possibility to enter the TCTD value.

The CT invocation can be done either by functional or by keypad protocol:
a) Using Keypad protocol (e.g. LH DT #<Code for Invocation of CT># <Time before automatic release of CT># RH)
b) Using Functional protocol by selecting to deactivate the "Call Transfer" feature on the display of the ISDN phone, and then enter the desired CT call duration time via a selection of various options from the apparatus display.

The administation of TCT is done in the following manner:
- MML Interface (network administrator option):
   MODSUB:LAC=lac,DN=dn,COS=TCT-HHMM, SERV=service;
   where HH=hours, MM=miutes define the TCTD timer value.

At the administration of TCT a TCTD value is also entered. The CT served user at the point of CT invocation haves the possibility to select no time at all. If this is done then the default TCTD value given upon TCT administration by network administrator is used.

Variant#3: Advanced user defined TCT.

Within this implementation, CT is invocation is also altered. When CT is invoked then on top of the invocation command the time of the CT connection duration should be entered. Then, simultaneously to the CT invocation the CT call duration supervision timer (TCTD) will be assigned with the value defined by CT served user.

Then the remote users will get the normal CT notifications with the addition of the time duration of the CT connection (depending on TCTD default value).

When the CT connection is released by the remote users before the TCTD expiration then TCTD timer is stopped and released. If CT connection is still active and the TCTD timer value has been elapsed then the CT connection is released.

An aditional option can be to send an additional notification messaged to the CT served user when a CT connection has been disconnected.

An accession which makes this variant differ from the last one is the added possibility of control of CT call duration by the remote users. Within this accession, when the remote users need to communicate for a time longer than the CT served user has defined they can interrogate by taking over the all charging actions.

For the implementation of this variant at the public switch, software changes are needed at the processor which handles CT feature (GP for EWSD product) in order to be able to enter the TCTD value at the invocation time, to handle the assigning of the new timer (TCTD), to handle the expiration of it (new steptable, routines are needed) and also - and more importantly - to perform all necessary actions to transport the charging from the CT served user to the remote users. Also adaptations in database administration processor and MML handler (CP for EWSD product) will be necessary in order to be able to handle the enhanced MML for CT (for the administration of CT) and the additional "reverse charging" relevant functions necessary for this variant of CT. Additionally, software changes are also needed at the firmware of the ISDN devices which use functional protocol in order to have the possibility to enter the TCTD value.

The CT invocation can be done either by functional or by keypad protocol:
a) Using Keypad protocol (e.g. LH DT #<Code for Invocation of CT># <Time before automatic release of CT># RH)
b) Using Functional protocol by selecting to deactivate the "Call Transfer" feature on the display of the ISDN phone, and then enter the desired CT call duration time via a selection of various options from the apparatus display.

The interrogation of the remote partners is done by using the normal CT invocation procedure (which means that the remote user which interrogates the CT connection must have administered CT feature):
a) Using Keypad protocol (e.g. LH DT #<Code for Invocation of CT># RH)
b) Using Functional protocol by selecting to deactivate the "Call Transfer" feature on the display of the ISDN phone.

The administration of TCT is done in the following manner:
- MML Interface (network administrator option):
   MODSUB:LAC=lac,DN=dn,COS=TCT-HHMM, SERV=service;
   where HH=hours, MM=miutes define the TCTD timer value.

At the administration of TCT a TCTD value is also entered. The CT served user at the point of CT invocation haves the possibility to select no time at all. If this is done then the default TCTD value given upon TCT administration by network administrator is used.

It should be noted here that this accession will make CT feature a lot more user-friendly.

The current invention have the following advantages:
- The user of the feature can control efficiently the duration of the CT call he established.
- The user doesn't have to use the enhancements of CT (interrogation and release) which can be time-consuming and annoying. Those enhancements can be replaced by this invention's solution. This deduces the traffic in the CP because the controller doesn't interfere with the CT call after it is established (which is also proven to be rather costly).
- The transferred parties are informed about the time duration (maximum length) of the CT call. Therefore they can adjust their time properly and the possibility of precocious call termination is - as much as it can be - eliminated.
- The CT controller doesn't have to worry about the connection, meaning that he/she can make the CT call and then continue with another task. Further actions concerning this transaction are performed by the network automatically.
- The feature becomes more user friendly since it provides a possibility of control of the CT connection at the remote users also.
- Within this implementation the served user can control each CT performed individually and automatically.

### BRIEF DESCRIPTION OF THE DRAWINGS

Preferred embodiments of the present invention will now be described with reference to the accompanying drawing in which:

The figures show the call flow between the subscribers (parties) and the switching system (e.g. EWSD) or network in case of TCT feature.
Figure 1 shows an example of TCT variant 1, in case of CT in talk state invoked by functional protocol. Automatic call release of CT call due to TCDT expiration.
Figure 2 shows an example of TCT variant 2, in case of CT in talk state invoked by functional protocol. Automatic call release of CT call due to TCDT expiration.
Figure 3 shows an example of TCT variant 3, in case of CT in talk state invoked by functional protocol, including the remote users interrogation to the CT connection. CT Call released due to A-sub disconnect (TCT interrogation invoked).
Figure 4 shows an example of TCT variant 1, in case of CT in talk state invoked by keypad protocol. Automatic call release of CT call due to TCDT expiration.
Figure 5 shows an example of TCT variant 2, in case of CT in talk state invoked by keypad protocol. Automatic call release of CT call due to TCDT expiration.
Figure 6 shows an example of TCT variant 3, in case of CT in talk state invoked by keypad protocol, including the remote users interrogation to the CT connection. CT Call released due to A-sub disconnect (TCT interrogation invoked).

### DETAILED DESCRIPTION OF EMBODIMENTS OF THE INVENTION

In the figures show schematic flow charts. Sub A is a calling party (subscriber or user), Sub B is a first called party and Sub C is a second called party. A call connection among the parties can be established through the telecommunication network (simply mentioned as network), which usually comprises at least one switching system (not shown). The message flow is depicted and comprises short description.

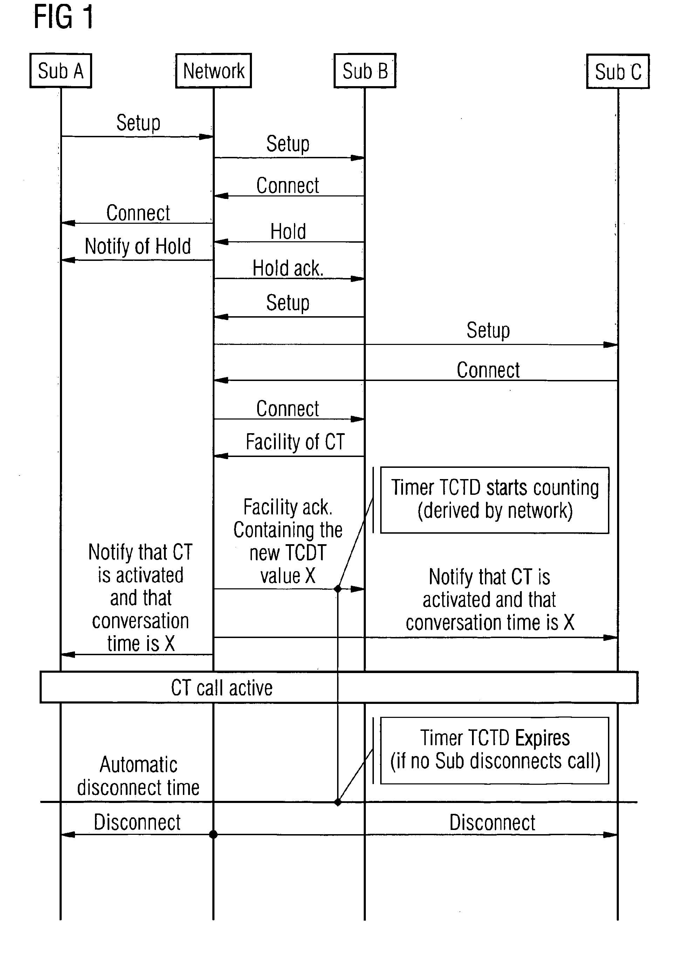

At figure 1 Sub A establishes a connection with Sub B. Sub B puts Sub A on Hold and establishes a connection with Sub C. Then B sub invokes CT in talk state via functional protocol. Then CT is initiated and X time value (derived by network default TCTD value or by the value given at the CT administration command given for the specific CT served user) defined is given to TCTD timer. The CT remote users are informed via normal CT notification messages about the limit of the CT connection. Then when this limit is reached, TCTD timer expires and CT connection is automatically released by network.

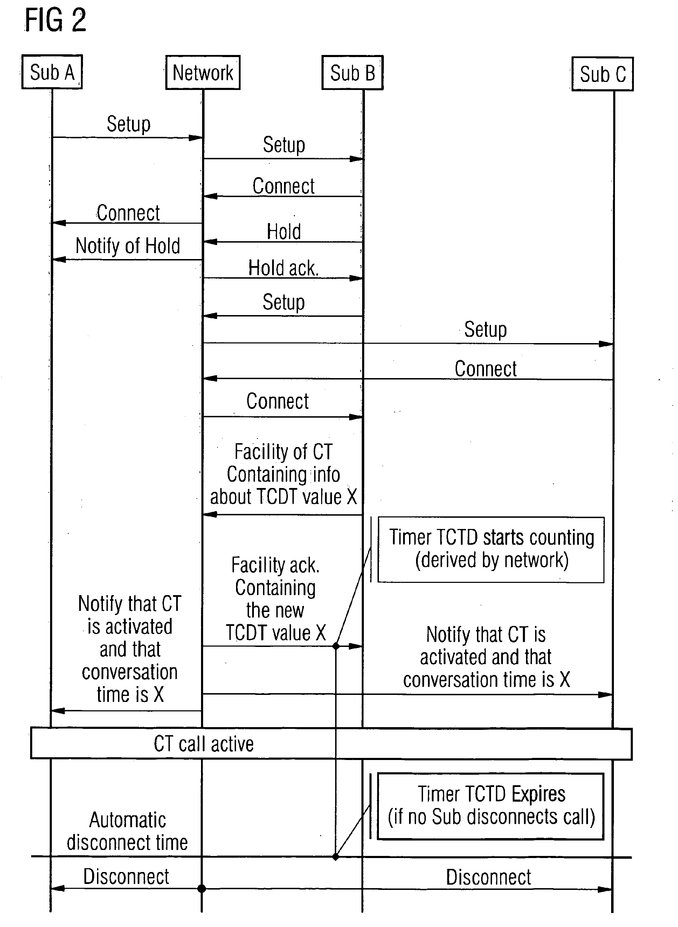

At figure 2 Sub A establishes a connection with Sub B. Sub B puts Sub A on Hold and establishes a connection with Sub C. Then B sub invokes CT in talk state via functional protocol and gives X time value to TCTD timer. The CT remote users are informed via normal CT notification messages about the limit of the CT connection. Then when this limit is reached, TCTD timer expires and CT connection is automatically released by network.

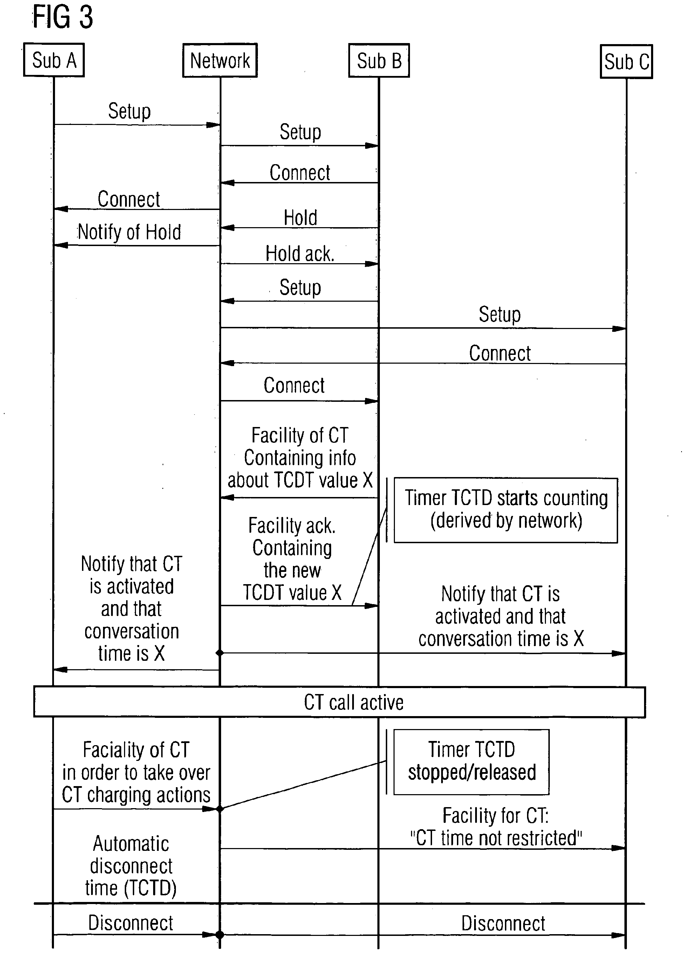

At figure 3 Sub A establishes a connection with Sub B. Sub B puts Sub A on Hold and establishes a connection with Sub C. Then B sub invokes CT in talk state via functional protocol and gives X time value to TCTD timer. The CT remote users are informed via normal CT notification messages about the limit of the CT connection. Then, before this limit is reached, A sub wishes to extend the CT connection duration and invokes CT in order to take over the charging and release TCTD timer. CT connection is not automatically released by network, but is releases when Sub A releases the call.

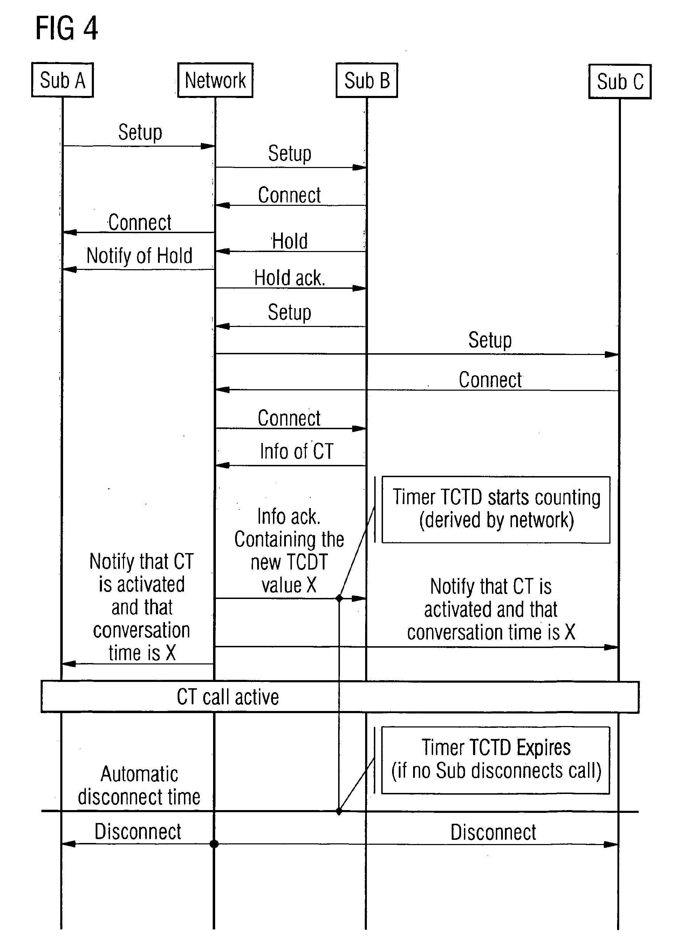

At figure 4 Sub A establishes a connection with Sub B. Sub B puts Sub A on Hold and establishes a connection with Sub C. Then B sub invokes CT in talk state via keypad protocol. Then CT is initiated and X time value (derived by network default TCTD value or by the value given at the CT administration command given for the specific CT served user) defined is given to TCTD timer. The CT remote users are informed via normal CT notification messages about the limit of the CT connection. Then when this limit is reached, TCTD timer expires and CT connection is automatically released by network.

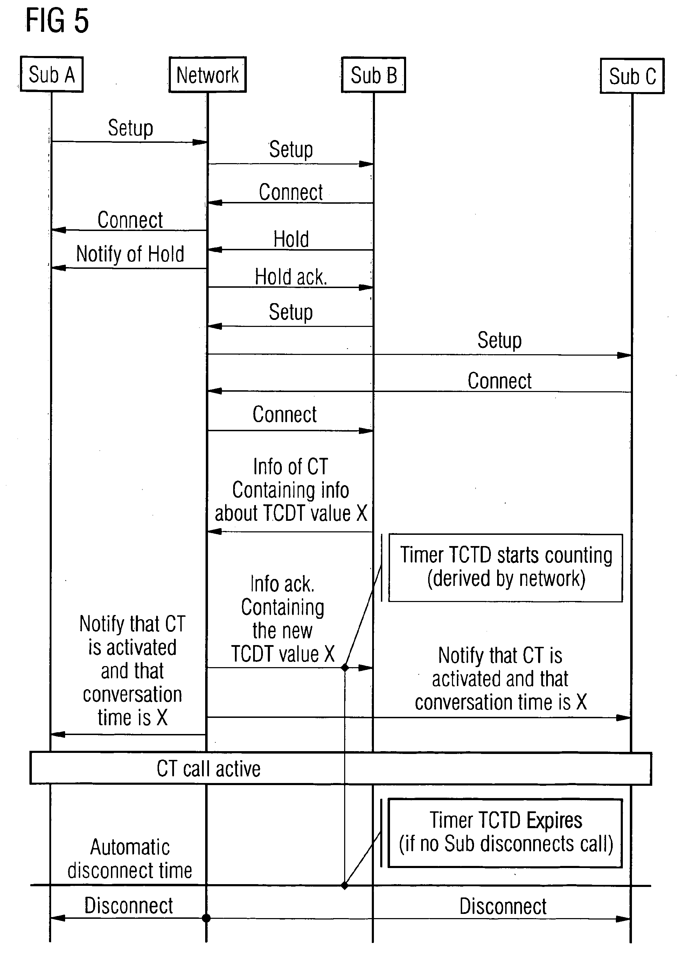

At figure 5 Sub A establishes a connection with Sub B. Sub B puts Sub A on Hold and establishes a connection with Sub C. Then B sub invokes CT in talk state via keypad protocol and gives X time value to TCTD timer. The CT remote users are informed via normal CT notification messages about the limit of the CT connection. Then when this limit is reached, TCTD timer expires and CT connection is automatically released by network.

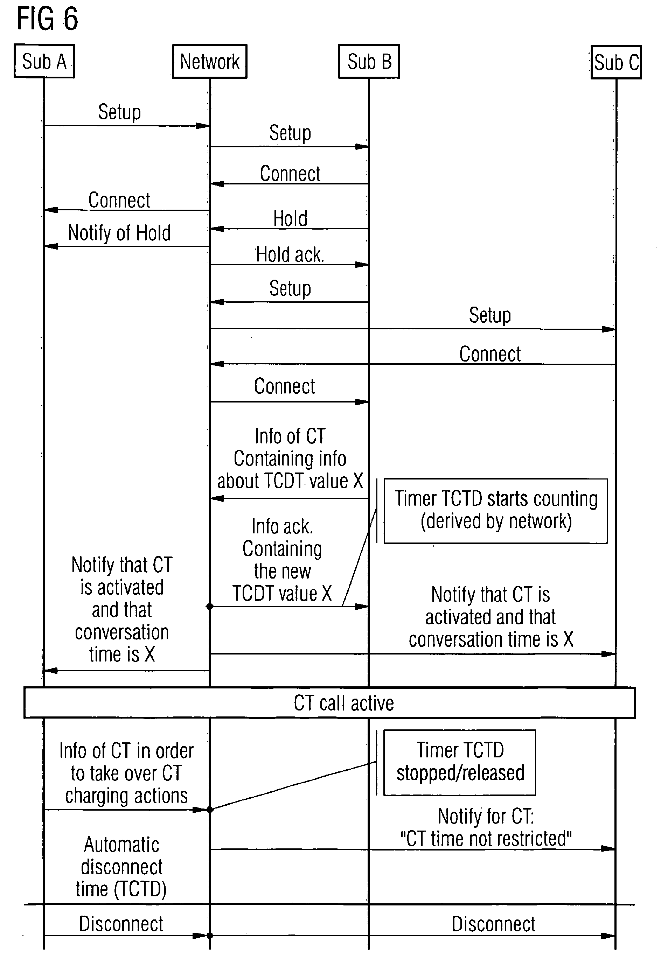

At figure 6 Sub A establishes a connection with Sub B. Sub B puts Sub A on Hold and establishes a connection with Sub C. Then B sub invokes CT in talk state via keypad protocol and gives X time value to TCTD timer. The CT remote users are informed via normal CT notification messages about the limit of the CT connection. Then, before this limit is reached, A sub wishes to extend the CT connection duration and invokes CT in order to take over the charging and release TCTD timer. CT connection is not automatically released by network, but is releases when Sub A releases the call.

Some practical examples of TCT are the following:
- A CT served user (single user or an entire company) has a lot of expenses due to uncontrolled CT calls. This client by using TCT can control all CT calls performed and reduce the expenses of CT.
- The transferred parties are connected and they don't know whether or when the controller of the CT call will release their call. Then this connection is suddently released by CT served user and this causes incovenience and the remote users become unsatisfied users. Using TCT, those network clients will be informed about their time limit and they can plan what they can/will discuss within the specified time limit (don't feel anxious about a possible sudden release of the call).
- A controller of CT sets a time for the CT call. When the call is established the connected subscribers are informed about the time limit of the CT call. Afterwards (or at the beginning), the CT connected users decide they need more time for their call. All the have to do is to indicate they'll take over all charging apsects by sending a CT invocation message to the network. This would anticipate an undesired termination of the call due to an insufficient time limit of the call.

## Claims

1. Method of controlling duration of a call connection while using a call transfer processing within a telecommunication network in which a call connection is established trough the network (Network) between a calling party (Sub A) and a first called party (Sub B), comprising the steps of:
- transferring the call connection from the first called party (Sub B) to a second called party (Sub C),
- initiating a timer by setting a predefined time period, and
- disconnecting the call connection between said parties afterwards when expiring the predefined time period.

2. Method as claimed in claim 1, wherein the time period is predefined by a default value.

3. Method as claimed in claim 1, wherein the time period is predefined by the first called party (Sub B).

4. Method as claimed in claim 1, 2 or 3, wherein the calling party (Sub A) and the second called party (Sub C) are notified about said time period prior to disconnecting said call connection.

5. Method as claimed in claim 4, wherein the timer is stopped by the influence of the calling party (Sub A) prior to expiring the predefined time period.

6. A switching system within a telecommunication network which is suitable for using the method according to one of the previous claims.
